# EUROPEAN PATENT APPLICATION

(11) **EP 1 471 757 A2**
(43) Date of publication of application: **27.10.2004**
(21) Application number: 04008085.5
(22) Date of filing: 02.04.2004
(51) Int. Cl.: H04Q 7/38

(54) **Dynamic resource allocation in packet data transfer**

(30) Priority: 02.04.2003 GB 0307585
(71) Applicant: MATSUSHITA ELECTRIC INDUSTRIAL CO., LTD., Kadoma-shi, Osaka 571-8501 (JP)
(72) Inventor: Cooper, David Edward, Newbury, Berkshire RG14 6PP (GB)
(74) Representative: Grünecker, Kinkeldey, Stockmair & Schwanhäusser Anwaltssozietät

(57) **Abstract**

A method for control of packet data transmissions in a TDMA wireless network to provide for additional choices in the allocation of communication channels. Measurement and recovery periods are re-assigned to avoid conflicts in operating conditions. The re-assignments for the GPRS system may be reduced to a simple formula.

## Description

### BACKGROUND OF THE INVENTION

### 1. Field of the Invention

This invention relates to multiple access communication systems and in particular it relates to dynamic resource allocation in time division multiple access systems.

### 2. Description of Related Art

In Multiple access wireless systems such as GSM, a number of mobile stations communicate with a network. The allocation of physical communication channels for use by the mobile stations is fixed. A description of the GSM system may be found in The GSM System for Mobile Communications by M. Mouly and M. B. Pautet, published 1992 with the ISBN reference 2-9507190-0-7.

With the advent of packet data communications over Time Division Multiple Access (TDMA) systems, more flexibility is required in the allocation of resources and in particular in the use of physical communication channels. For packet data transmissions in General Packet Radio Systems (GPRS) a number of Packet Data CHannels (PDCH) provide the physical communication links. The time division is by frames of 4.615 ms duration and each frame has eight consecutive 0.577 ms slots. A description of the GPRS system may be found in (GSM 03.64 V 8.5 release 1999). The slots may be used for uplink or downlink communication. Uplink communication is a transmission from the mobile station for reception by the network to which it is attached. Reception by the mobile station of a transmission from the network is described as downlink.

In order to utilise most effectively the available bandwidth, access to channels can be allocated in response to changes in channel conditions, traffic loading Quality of Service and subscription class. Owing to the continually changing channel conditions and traffic loadings a method for dynamic allocation of the available channels is available.

The amounts of time that the mobile station receives downlink or transmits uplink may be varied and slots allocated accordingly. The sequences of slots allocated for reception and transmission, the so-called multislot pattern is usually described in the form RXTY. The allocated receive (R) slots being the number X and the allocated transmit slots (T) the number Y.

A number of multislot classes, one through to 29, is defined for GPRS operation and the maximum uplink (Tx) and downlink (Rx) slot allocations are specified for each class. The specification for multislot class 12 is shown in Table 1 below.

In a GPRS system, access to a shared channel is controlled by means of an Uplink Status Flag (USF) transmitted on the downlink to each communicating mobile station (MS). In GPRS two allocation methods are defined, which differ in the convention about which uplink slots are made available on receipt of a USF. The present invention relates to a particular allocation method, in which an equal number "N" of PDCH's, where a "PDCH" uses a pair of uplink and downlink slots corresponding to each other on a 1-1 basis, are allocated for potential use by the MS. The uplink slots available for actual use by a particular mobile station sharing the uplink channel are indicated in the USF. The USF is a data item capable of taking 8 values V0- V7, and allows uplink resources to be allocated amongst up to 8 mobiles where each mobile recognises one of these 8 values as "valid", i.e. conferring exclusive use of resources to that mobile. In the case of the extended dynamic allocation method, for example, reception of a valid USF in the slot 2 of the present frame will indicate the actual availability for transmission of transmit slots 2...N in the next TDMA frame or group of frames, where N is the number of allocated PDCHs. Generally for a valid USF received at receiver slot n, transmission takes place in the next transmit frame at transmit slots n, n+1 et seq. to the allocated number of slots (N). For the extended dynamic allocation method as presently defined these allocated slots are always consecutive.

The mobile station is not able instantly to switch from a receive condition to a transmit condition or vice versa and the time allocated to these reconfigurations is known as turnaround time. The turnaround time is a concept including both a time required for switching from a receive condition to a transmit condition, that is, a time required for getting ready to transmit, and a time required for switching from a transmit condition to a receive condition, that is, a time required for getting ready to receive. As presently defined the turnaround time depends upon the class of mobile. A turnaround time of one slot is allocated in the case of class 12 mobiles such as are used for the exemplary embodiment described later. It is also necessary for the mobile station, whilst in packet transfer mode, to perform adjacent cell signal level measurements. The mobile station has continuously to monitor all Broadcast Control Channel (BCCH) carriers as indicated by the BA(GPRS) list and the BCCH carrier of the serving cell. A received signal level measurement sample is taken in every TDMA frame, on at least one of the BCCH carriers. (3GPP TS 05.08 10.1.1.2)

These adjacent cell signal level measurements are taken prior to re-configuration from reception to transmission or prior to re-configuration from transmission to reception. The number of slots allocated to each combination of these adjacent cell signal level measurements and re-configurations (turnaround) for multislot class 12 is two. As the combination of adjacent cell signal level measurement and turnaround, it is noted that there are 4 patterns of combinations as described later, including the (2 patterns of) combinations of adjacent cell signal level measurement and turnaround (getting ready to transmit or getting ready to receive: hereafter referred to as "transmit/receive preparation" in abbreviated terms) and (another 2 patterns of) turnaround (transmit/receive preparation) only. Hereafter, these combinations are abbreviated as "turnaround (and adjacent cell signal level measurement)."

Arising from the requirement to allocate particular slots for turnaround (and adjacent cell signal level measurement) purposes, some restrictions occur and potential dynamic channel allocations are lost. These restrictions reduce the availability of slots for uplink transmissions; reduce the flow of data and reduce the flexibility of response to changing conditions.

An exhaustive technical review and wholesale change to the existing prescribed operating conditions might be expected to alleviate the problems associated with dynamic allocation. Whilst this is possible, the considerable difficulties caused by such wholesale change would be generally unwelcome and this resolution of the technical problem is unlikely.

There is a need therefore to provide a solution to the problems affecting dynamic channel allocation with minimal effect on existing prior art methods.

### SUMMARY OF THE INVENTION

It is an object of this invention to reduce the restrictions affecting dynamic channel allocation with minimal effect on the existing prescript.

In accordance with the invention there is provided a method for controlling packet data transmissions as set out in the attached claims.

In the case of the present invention, more transmission capacity has been enabled by allowing some transmission patterns that otherwise would not comply with the specified rules while maintaining the conventional use of GSM timing advance and slot allocation.

### BRIEF DESCRIPTION OF THE DRAWINGS

Figure 1 illustrates the GPRS TDMA frame structure showing the numbering convention used for uplink and downlink slots;
Figure 2 illustrates a 3 slot allocation and a state transition from R3T0 to R3T2;
Figures 3 to 5 show 2 PDCH extended dynamic allocations in steady state for R2T0, R2T1 and R2T2 respectively with associated adjacent cell signal level measurement and turnaround intervals;
Figure 6 is a state transition diagram for 2 PDCH extended dynamic allocations;

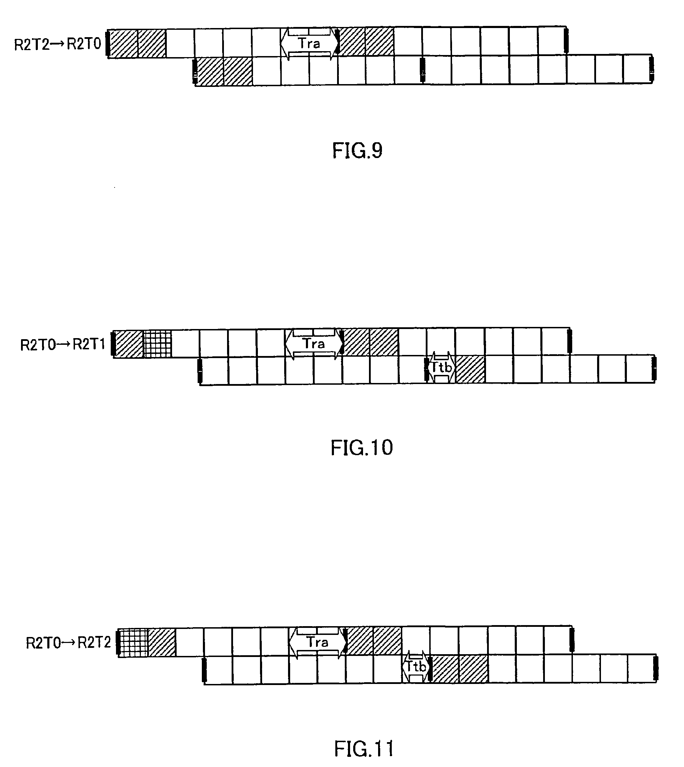

Figures 7 to 11 show the state transitions of Figure 6;
Figure 12 to 15 show the 3 PDCH extended dynamic allocation in steady state;
Figure 16 is a state transition diagram for 3 PDCH extended dynamic allocation;
Figures 17 to 25 show the state transitions of Figure 16;
Figures 26 to 30 show the steady state 4 slot extended dynamic allocation of the prior art;
Figures 31 to 35 show the steady state 4 slot extended dynamic allocation in accordance with the invention;
Figure 36 is a state transition diagram for 4 slot extended dynamic allocation in accordance with the invention;

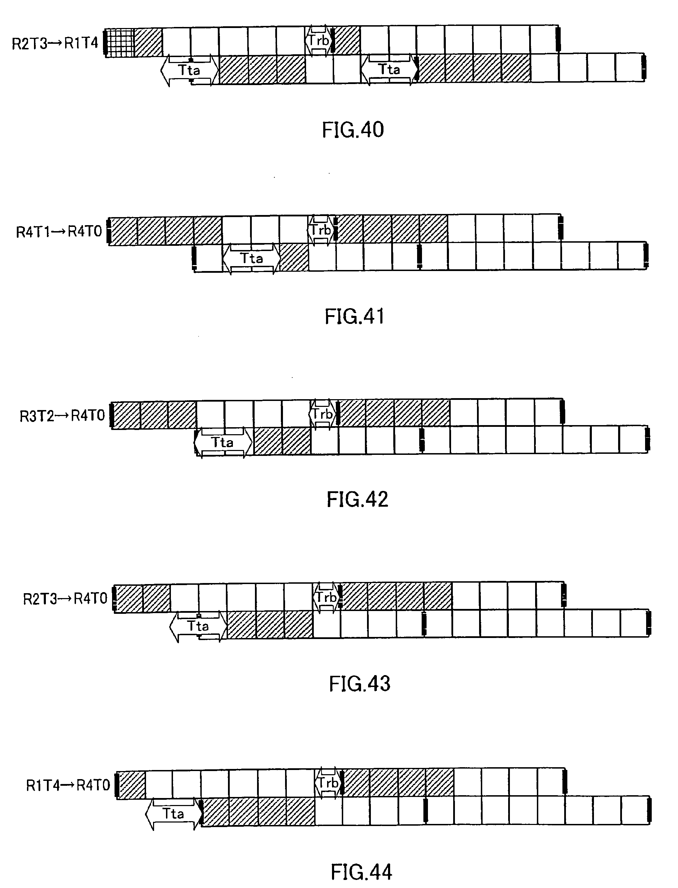

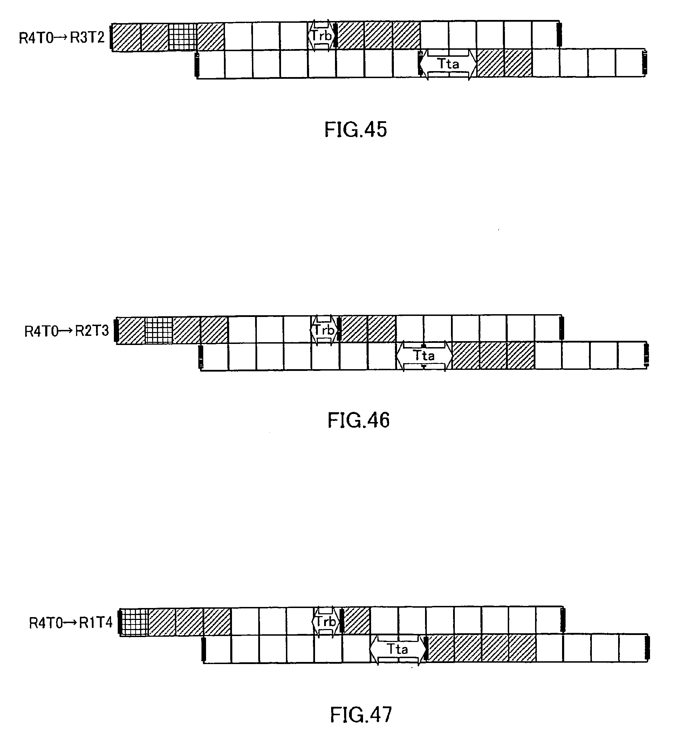

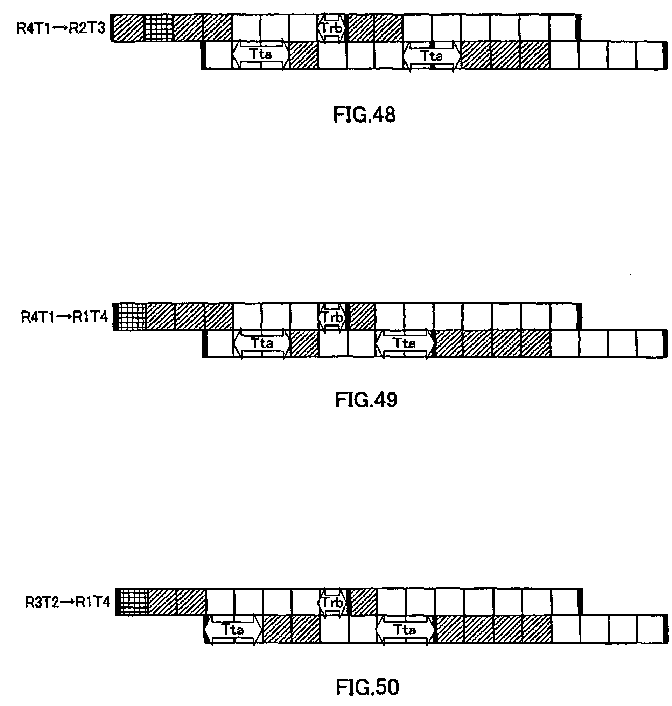

Figures 37 to 50 show the state transitions of Figure 36;
Figure 51 is an exemplary block diagram for illustrating one example of a mobile station which is adaptable to the present embodiment;
Figure 52 is a flowchart for illustrating an operation example of the slot allocation calculator 128 in Figure 51; and
Figure 53 is an exemplary block diagram for illustrating one example of a base station which is adaptable to the present embodiment.

### DESCRIPTION OF THE PREFERRED EMBODIMENT

In this embodiment, the invention is applied to a GPRS wireless network operating in accordance with the standards applicable to multislot class 12 in extended dynamic allocation.

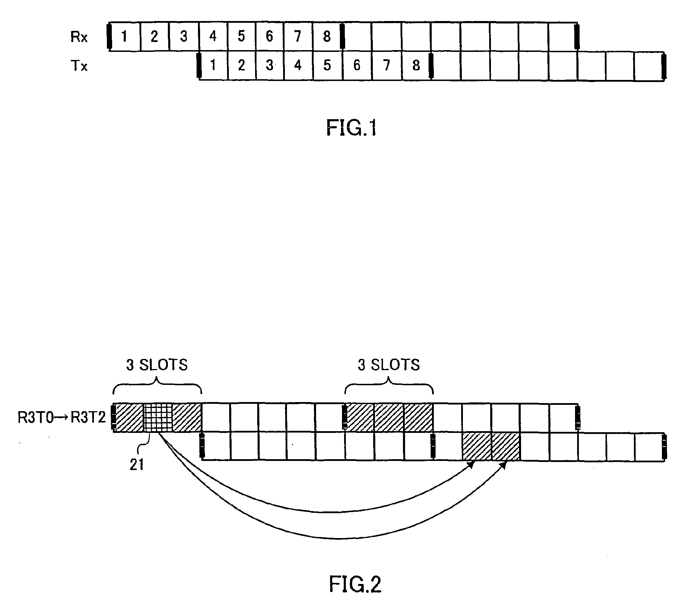

In Figure 1 the GPRS TDMA frame structure is illustrated and shows the numbering convention used for uplink and downlink slots. It should be noted that in practice Tx may be advanced relative to Rx due to timing advance in accordance with conventional GSM usage, although this is not shown in the illustration. Thus in practice the amount of time between the first Rx and first Tx of a frame may be reduced by a fraction of a slot from the illustrated value of 3 slots due to timing advance.

FIG 1 illustrates two successive TDMA frames with receiver (Rx) and transmitter (Tx) slots identified separately. The slot positions within the first frame are shown by the numerals 1 through to 8 with the transmission and reception slots offset by a margin of three slots. This is in accordance with the convention that that the first transmit frame in a TDMA lags the first receive frame by an offset of 3 (thus ordinary single slot GSM can be regarded as a particular case in which only slot 1 of transmit and receive is used).

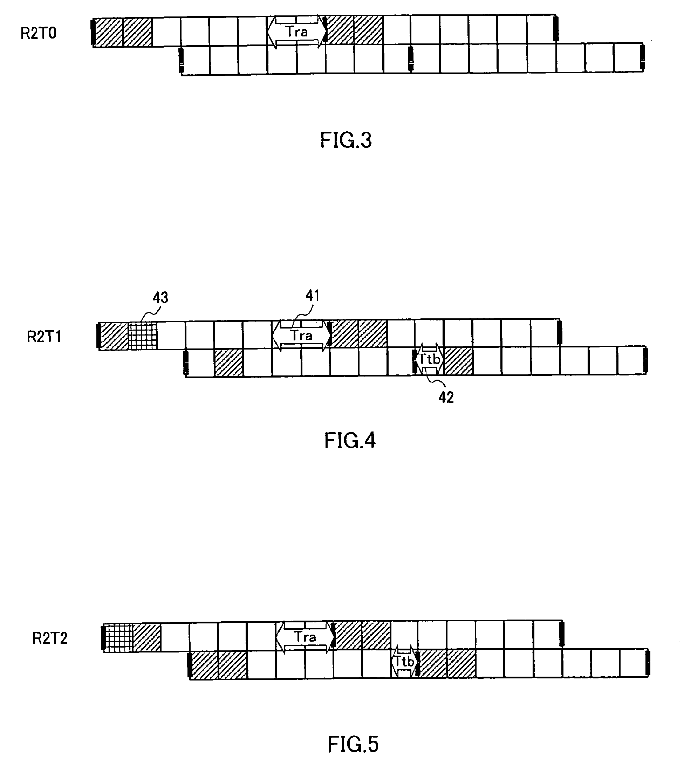

The remaining figures (save for the state transition diagrams and block diagrams) conform to the illustration of Figure 1 but the slot numbering has been removed for extra clarity. The shaded slots are those allocated for the particular states, and the arrowed inserts, e.g. numerals 41 and 42 of Figure 4, indicate the applicable turnaround (and adjacent cell signal level measurement) intervals and number of slots allocated for these intervals. The hashed slots, e.g. numeral 43 of Figure 4, indicate reception of a valid USF. As mentioned above, constraints are imposed by the need to allow slots for turnaround (and adjacent cell signal level measurement), and the prescript for these in 3GPP TS 05.02 Annex B limits dynamic allocation as shown in table 1 for the example of multislot class 12.

**Table 1**

| **Multislot class** | **Maximum** | **number** | **of slots** | **Minimum number of slots** | | | |
|---|---|---|---|---|---|---|---|
| | **Rx** | **Tx** | **Sum** | **T**_{**ta**} | **T**_{**tb**} | **T**_{**ra**} | **T**_{**rb**} |
| 12 | 4 | 4 | 5 | 2 | 1 | 2 | 1 |

- Tₜₐ: is the time needed for the MS to perform adjacent cell signal level measurement and get ready to transmit
- T_{tb}: is the time needed for the MS to get ready to transmit
- Tᵣₐ: is the time needed for the MS to perform adjacent cell signal level measurement and get ready to receive
- T_{rb}: is the time needed for the MS to get ready to receive
It should be noted that in practice the times Tₜₐ and T_{tb} may be reduced by a fraction of a slot due to timing advance.

A period for extended dynamic allocation including adjacent cell signal level measurement is specified as Tᵣₐ (3GPP TS 05.02 6.4.2.2). That is to say that all adjacent cell signal level measurements are taken just before the first receive slot and not before the transmit slot.

If there are m slots allocated for reception and n slots allocated for transmission, then there must be Min(m,n) reception and transmission slots with the same slot number.

Here, an explanation is given on the extended dynamic allocation method that is the technique on which the present invention is predicated. According to the extended dynamic allocation method, a pair of a receive frame and a transmit frame corresponds to each other on a 1-1 basis with a predetermined offset, where transmission is started from a transmit slot having the same number as that of a receive slot in which a valid USF was received. The starting of transmission is done from the next transmission frame of the transmission frame corresponding to the reception frame in which a valid USF is received. The number of transmit slots for transmission in a transmit frame equals to the slot numbers allocated to the transmit frame (N), and slots to be transmitted in a transmit frame are always consecutive. The starting position of transmit slots is maintained until the reception of the next valid USF.

For example, with reference to Figure 2, an example of a 3 slot allocation, annotated R3T0→R3T2, is shown with no uplink slot allocated initially. A valid USF 21 received on Rx slot 2 allows 2 TX slots on the next uplink frame. The annotation "→" indicates a change of state. Here, as described above, R3T0 indicates receive slots of 3 and transmit slots of 0, while R3T2 indicates receive slots of 3 and transmit slots of 2. In this case, because a valid USF 21 has been received on Rx slot 2 in the R3T0 state, the starting position of transmit slots in the next transmission frame (the R3T2 state after transition) is Tx slot 2. At this time, the number of transmit slots to be transmitted is 2, which is the same as the number of the allocated transmitted slots, and these two transmit slots are consecutive.

Figures 3 to 5 show steady state extended dynamic allocations for 2 PDCH according to the annotations and the turnaround (and adjacent cell signal level measurement) intervals are marked. For example, in the case of Figure 3 allocation, consecutive two frames are in the same state because they are in a steady state. R2T0 indicates that the number of receive slots is 2 and the number of transmit slots is 0. In this case, T_{tb} is unnecessary because there is no transmission. Tᵣₐ starts at two slots before the reception of the next frame.

Figure 4 illustrates steady state extended dynamic allocation for R2T1 (Rx 2 slots, Tx 1 slot). In this case, a valid USF 43 received on Rx slot 2 allows one Tx slot on the next uplink frame. At this time, the starting position of the allowed transmit slot is Tx slot 2, which has the same slot number as the reception position of the valid USF 43 (Rx slot 2) in accordance with the extended dynamic allocation described above.

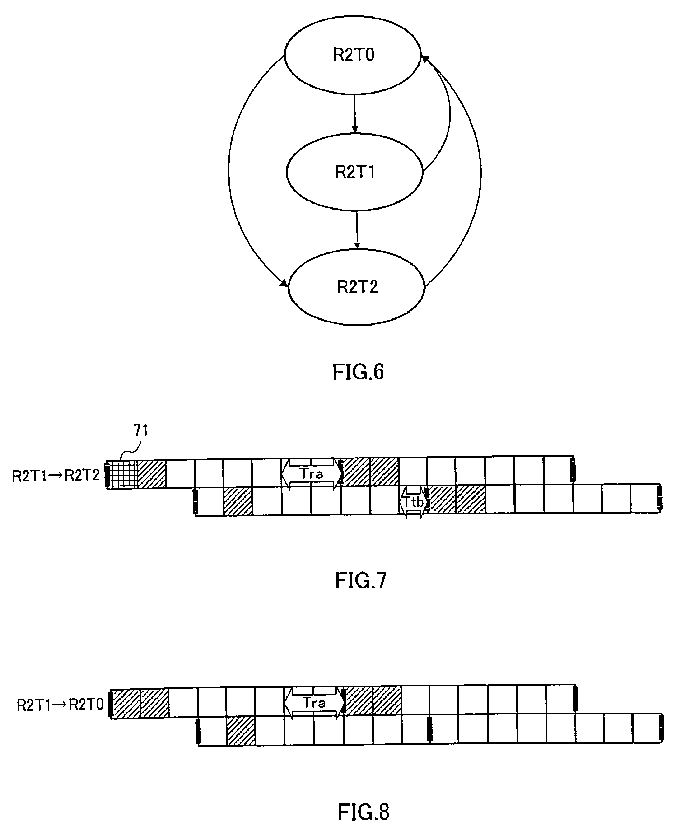

Figure 6 is a state transition diagram for 2 PDCH extended dynamic allocations and shows all of the allowed states. Specifically, as illustrated in Figure 6, an aggregate of five state transitions are allowed, including, from R2T0 (Rx 2 slots, Tx 0 slot) to R2T1 (Rx 2 slots, Tx 1 slot), from R2T0 to R2T2 (Rx 2 slots, Tx 2 slots), from R2T1 to R2T0, from R2T1 to R2T2, and from R2T2 to R2T0.

Figures 7 through to 11 show the slot positions and applicable turnaround (and adjacent cell signal level measurement) intervals for the transitions of Figure 6.

For example, Figure 7 illustrates a state transition from R2T1 to R2T2. In this case, because a valid USF 71 has been received on Rx slot 1 in the R2T1 state, the starting position of transmit slots in the next transmission frame is Tx slot 1.

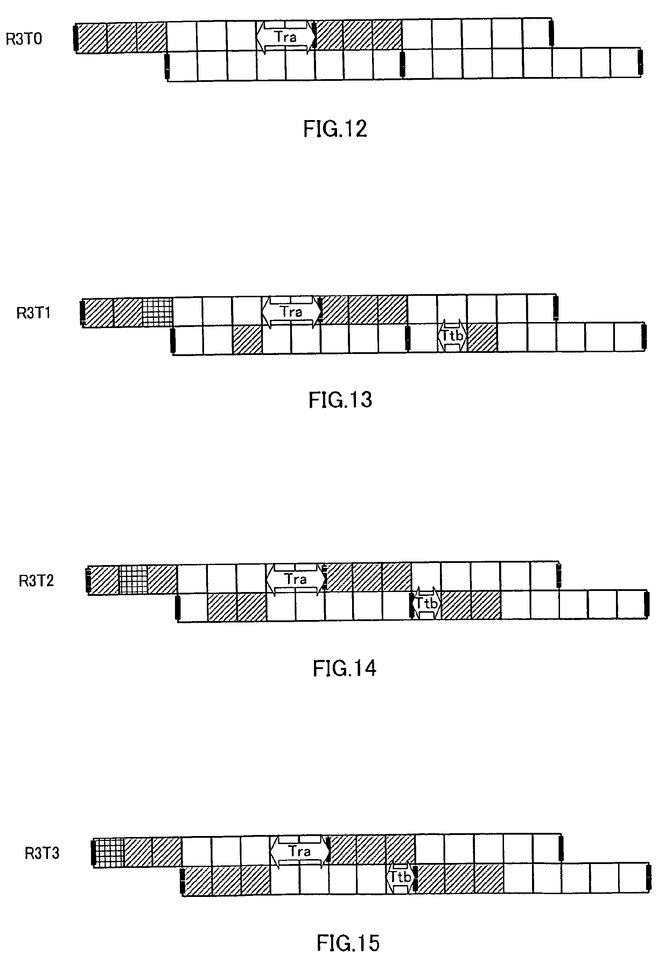

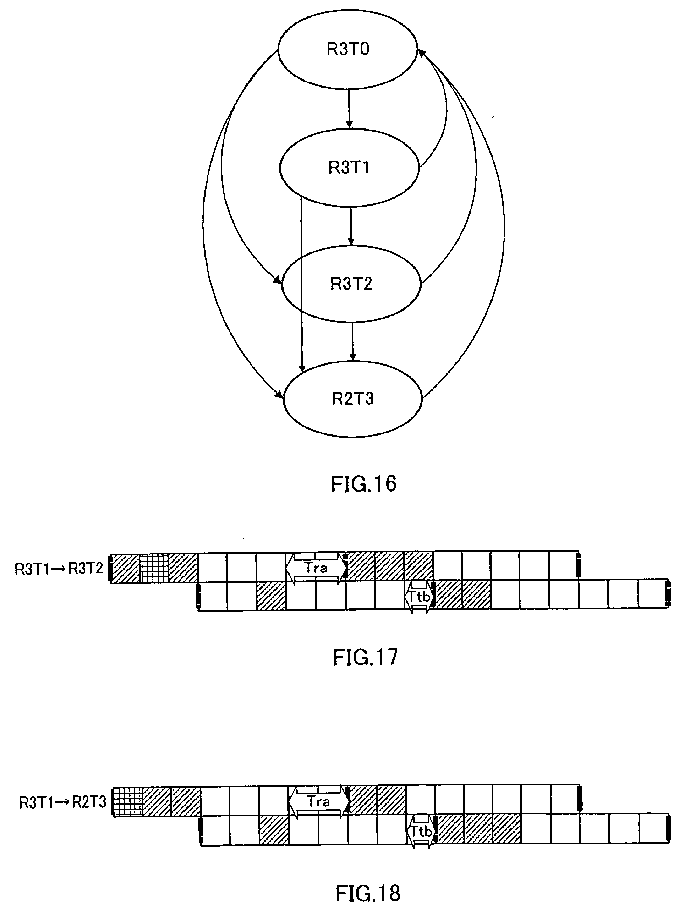

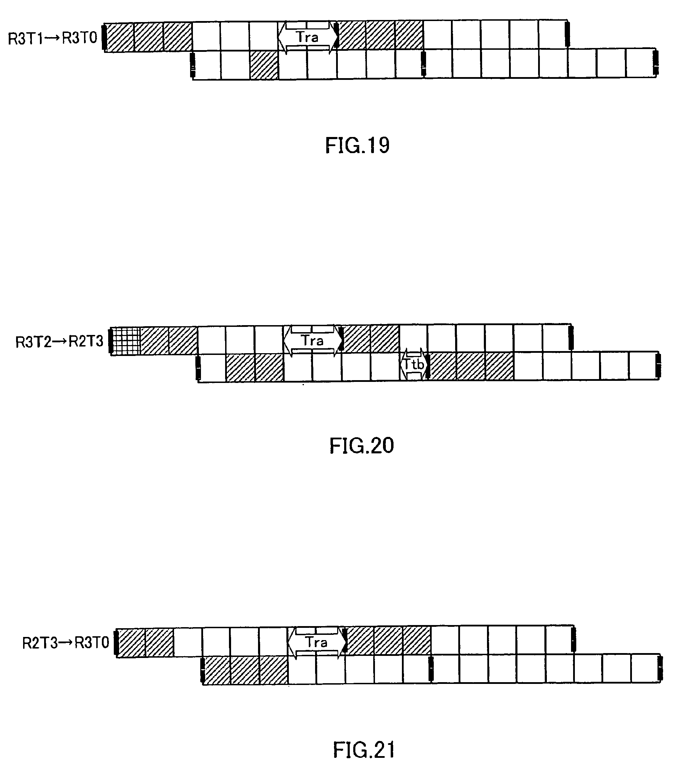

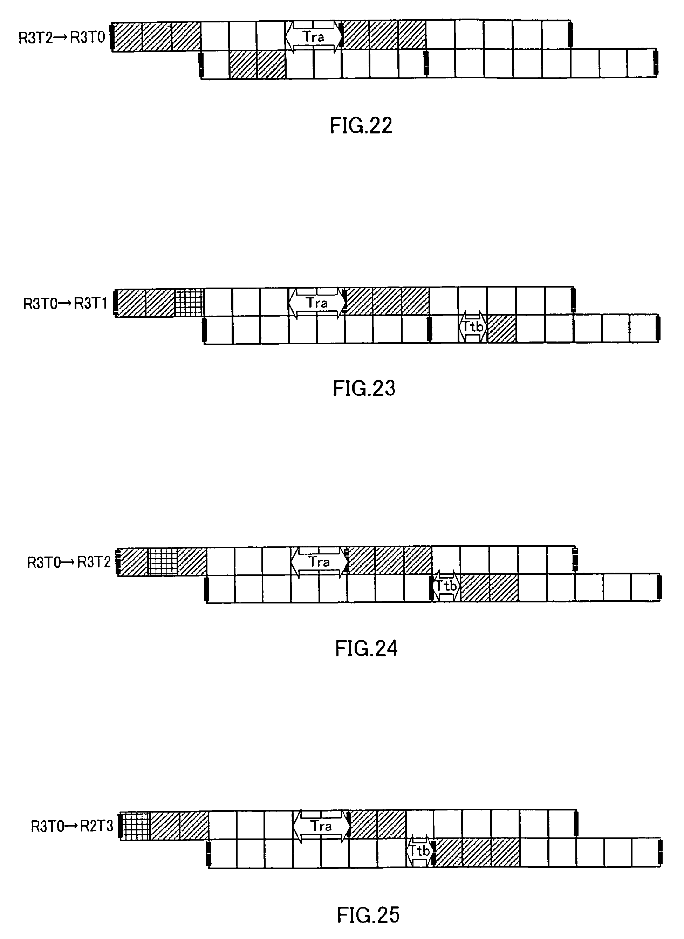

Steady state 3 PDCH extended dynamic allocations are shown in Figures 12 to 15. The state transitions for 3PDCH are shown in Figure 16 and the corresponding slot positions and turnaround (and adjacent cell signal level measurement) intervals in Figures 17 to 25. It can be seen that for all of the illustrations no impediment to slot allocation arises from the application of the turnaround (and adjacent cell signal level measurement) intervals.

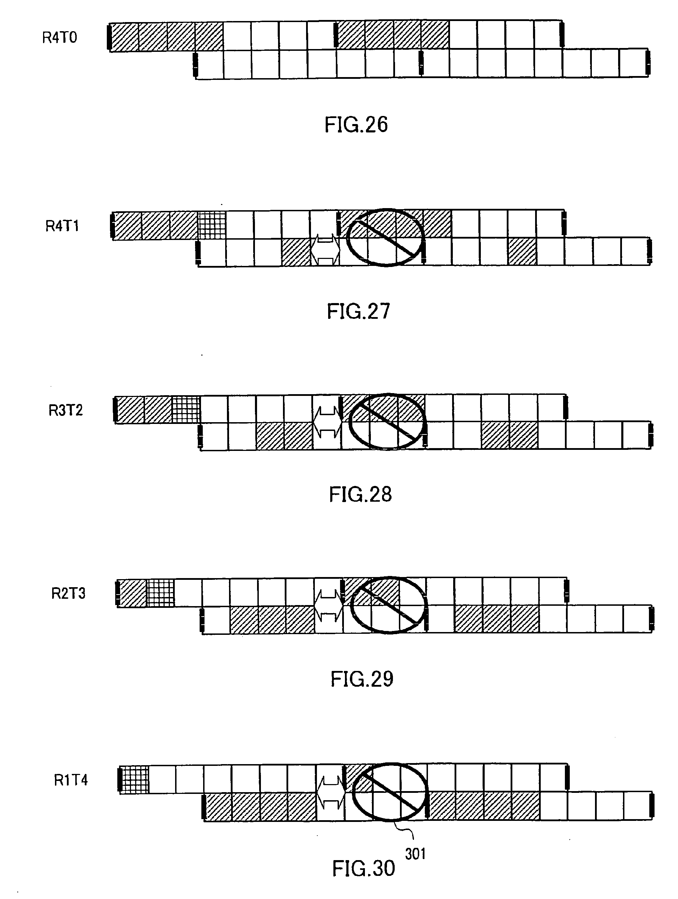

With 4 slot extended dynamic allocations, however conflicts occur and the prescribed conditions do not permit implementation beyond the steady state R4T0 case illustrated in Figure 26. This is because the constraint Tᵣₐ=2 for accommodating adjacent cell signal level measurement cannot be applied since Tx slot 4 is always used, leaving only a single slot turnaround (receive preparation) time before Rx slot 1. Examples of allowed and prohibited 4 slot extended dynamic allocations in accordance with the prior art are shown in Figures 26 to 30. These indicate steady states and the four receive slots and no transmit slot R4T0 state of Figure 26 is allowed. The allocations prohibited are overlaid by a "no entry" logo (e.g. numeral 301 of Figure 30) in the illustrations of Figure 27, R4T1, fig 28, R3T2, fig 29 R2T3 and fig 30 R1T4. It can be seen that these prohibitions arise because of the limitation of just one slot allowed for time Tᵣₐ for adjacent cell signal level measurement and transmit preparation (the time needed to perform adjacent cell signal level measurement and then prepare for transmission).

In accordance with the invention, periods for adjacent cell signal level measurement and turnaround (transmit/receive preparation) are re-allocated to increase the availability of uplink resources when the uplink resources are otherwise constrained by prescribed allocations.

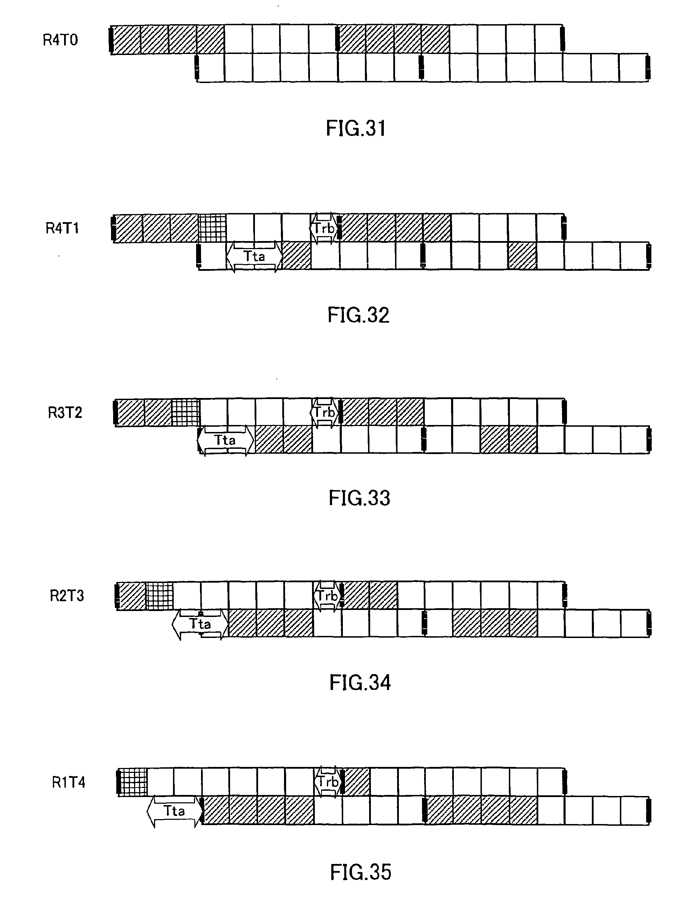

Application of the method in accordance with the invention provides for the previously prohibited allocations of Figures 27 to 30 to be admitted as shown in Figures 32 to 35. If N slots are allocated, and N + Tᵣₐ + 3 ≦ 8 (number of slots in a frame), then Tᵣₐ is used as the interval accommodating adjacent cell signal level measurement, otherwise if N + Tᵣₐ + 3 > 8 (condition XX), then Tₜₐ is used as the interval accommodating adjacent cell signal level measurement;
where
≦ less than or equal to
> greater than
Tₜₐ is the time needed to perform adjacent cell signal level measurement and then prepare for transmission.

Application of the method to the steady state R4T1 is shown in Figure 32.

With the number of PDCH's allocated N=4, the adjacent cell signal level measurement and turnaround interval Tᵣₐ =2, N +Tᵣₐ + 3 > 8 (4 + 2 + 3 = 9) and therefore Tₜₐ is used as the interval accommodating adjacent cell signal level measurement. The impediment to operation shown in Figure 27 is therefore removed by application of the method as illustrated in Figure 32.

This procedure is implemented in the mobile station which when using the extended dynamic allocation method, and on receiving an allocation of PDCH numbering "N", must perform the comparison above in order to time the radio link measurement procedure correctly.

The procedure performed by the network equipment is that when allocating a number of PDCHs "N", it recognises that when N satisfies the condition (XX) above it must take into account the capability of the mobile station to perform adjacent cell signal level measurements using Tₜₐ and provided that:
N + T_{rb} + 3 ≦ 8, is capable of allocating such a number of PDCHs.

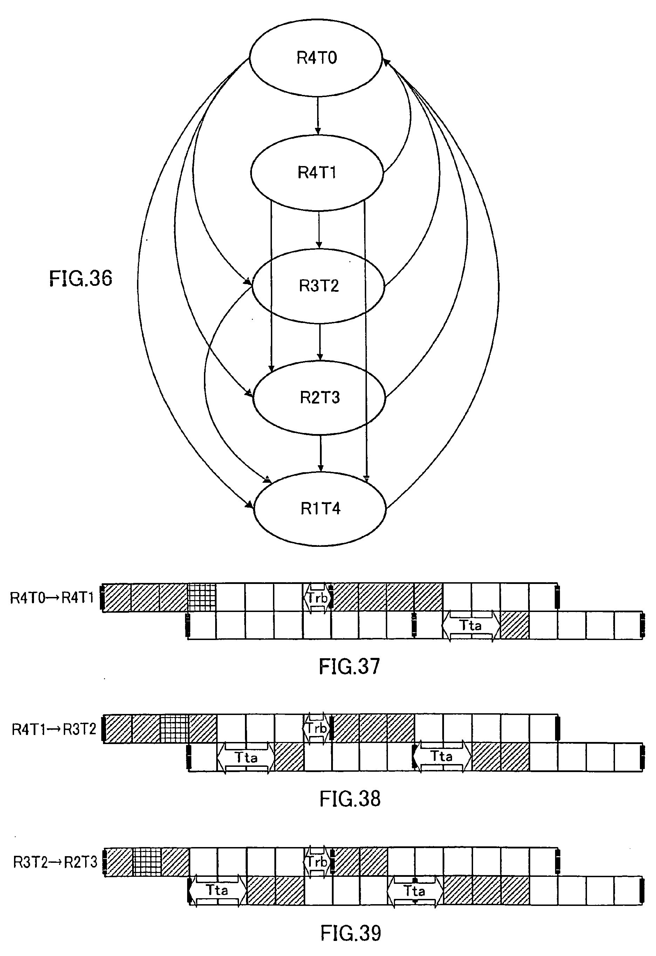

The method may be applied successfully to the remaining steady states shown in Figures 33, 34 and 35. Furthermore the method is effective for all of the 4 slot state transitions shown in the state transition diagram Figure 6. Illustrations of the 4 slot state transitions are given in Figures 37 through to 50.

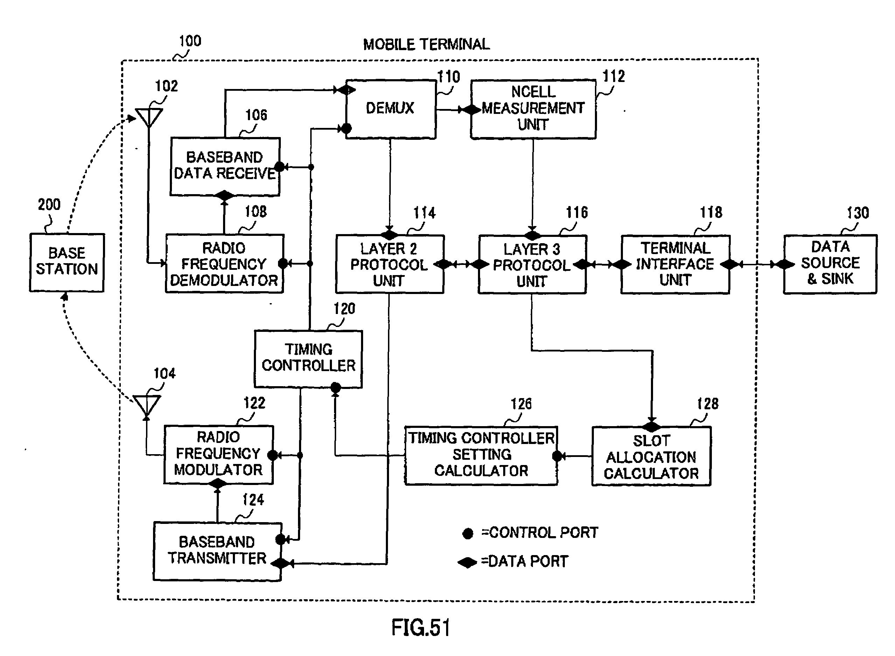

Figure 51 is a block diagram for a mobile station (MS) which is adaptable to the present embodiment.

A mobile station (wireless data communication terminal) 100 allows the bi-directional transfer of data between a base station 200 and an external data source and sink 130.

### Downlink

The base station 200 transmits GPRS signals to the mobile station 100. The GPRS signals are received on the receive antenna 102, and are demodulated to baseband ones by a radio frequency demodulator 108. The radio frequency demodulator 108 delivers the baseband signals to a baseband data receiver 106. The baseband data receiver 106 delivers the received baseband data to a demultiplexer 110. The demultiplexer 110 selects either an NCELL measurement unit 112 or a Layer 2 protocol unit 114 to process the above data, depending on its control input from a timing controller 120.

If the downlink baseband data is destined for the NCELL measurement unit 112, this unit performs adjacent cell signal level measurement, and transmits the resulting information to a Layer 3 protocol unit 116. The Layer 3 protocol unit 116 in turn transmits the data to the base station 200 via the uplink.

Downlink baseband data to be used for adjacent cell signal level measurement is routed to the Layer 3 protocol unit 116. The Layer 3 protocol unit 116 separates user plane data and control plane data. The user data is sent to a terminal interface unit 118. The terminal interface unit 118 sends the data to an external data source and sink 130.

### Control

Control plane data is used to perform internal control functions. In particular, any GPRS slot allocation frames sent from the base station 200 are used to send parameter data to a slot allocation calculator 128. The slot allocation calculator 128 calculates which TDMA slots shall be used for data reception, data transmission, and adjacent cell signal level measurement purposes. This information is sent to a timing controller setting calculator 126. The timing controller setting calculator 126 in turn reconfigures a timing controller 120 so as to perform each operation of receive preparation, transmit preparation, and adjacent cell signal level measurement at the correct time.

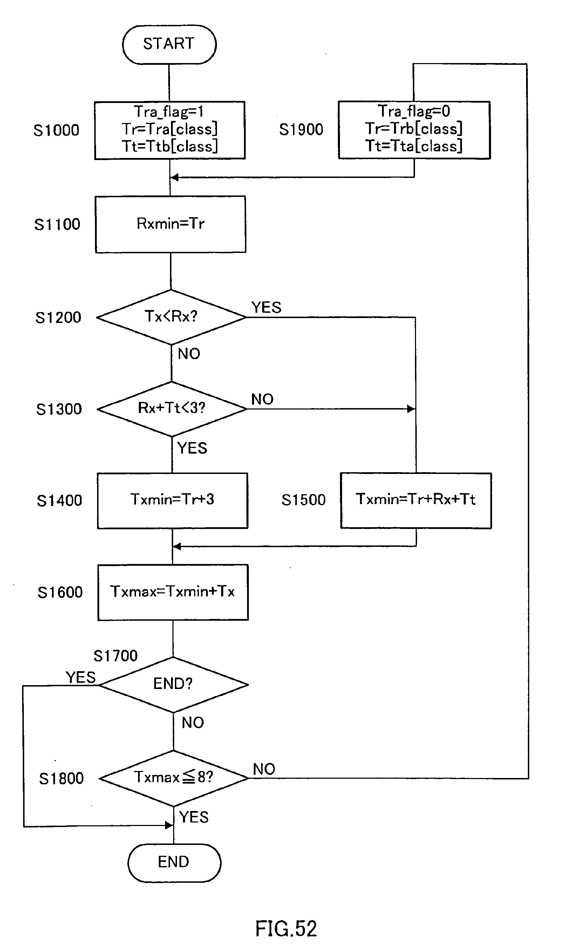

Figure 52 is a flowchart illustrating an operation example of the slot allocation calculator 128.

First, in step S1000, parameter Tra_flag is set into 1, while parameters Tr and Tt are set to values of Tra[class] and Ttb[class] respectively. Herein, Tra_flag is a parameter indicating which one of Tᵣₐ and Tₜₐ should be used as the interval accommodating adjacent cell signal level measurement, where the parameter indicates that Tᵣₐ should be used when set to 1, and that Tₜₐ should be used when set to 0. Tra[class] and Ttb[class] are values of Tᵣₐ and T_{tb} allocated to class (multislot class of a mobile station), which is an input parameter, respectively. The number of the class is a property of the mobile station. In addition, the value of Tᵣₐ, T_{tb} corresponding to each class is pre-stored in the format of, for example, Table 1.

Then, at step S1100, parameter Rxmin is set to the value of Tr as set in step S1000. Here, Rxmin is a parameter indicating the number of the first slot in downlink receive slots.

Then, at step S1200, the number of transmit slots (Tx) and the number of receive slots (Rx) is compared with each other. As the result of the comparison, if Tx ≧ Rx (S1200: NO), the process goes to step S1300, whereas if Tx < Rx (S1200: YES), it moves on to step S1500. It is noted that each value of Tx, Rx is included in the radio resource control plane data from the upper layer.

At step S1300, it is further judged whether Rx + Tt is less than 3 or not. Here, "3" is the number of slots for downlink and uplink offset. As the result of the judgment, if Rx + Tt < 3 (S1300: YES), the process goes to step S1400, whereas if Rx + Tt ≧ 3 (S1300: NO), it moves on to step S1500.

At step S1400, parameter Txmin is set to Tr + 3. Meanwhile, at step S1500, parameter Txmin is set to Tr + Rx + 3. Here, Txmin is a parameter indicating the number of the first slot in uplink transmit slots. Incidentally, the value set in step S1000 is used for Tr.

Then, at step S1600, parameter Txmax is set to Txmin + Tx. Here, Txmax is a parameter indicating the number of the next slot of the last slot in uplink transmit slots. Incidentally, the value set in step S1400 or step S1500 is used for Txmin.

Then, in step S1700, it is judged whether to end processing or not. Specifically, it is judged whether the processing from step S1100 through step S1600 is the first execution or the second execution. As the result of the judgment, if the processing is not ended, that is, if the processing from step S1100 through step S1600 is the first execution (S1700: NO), the process goes to step S1800, whereas if the processing from step S1100 through step S1600 is the second execution (S1700: YES), a string of processing is ended.

At step S1800, it is judged whether Txmax set in step S1600 is less than 8 or not. Here, "8" is the number of slots contained in one frame. As the result of the judgment, if Txmax ≦ 8 (S1800: YES), the string of processing is ended, whereas if Txmax > 8 (S1800: NO), the process goes to step S1900.

In step S1900, parameter Tra_flag is set into 0, while parameters Tr and Tt are set to values of Trb[class] and Tta[class] respectively, and after that, the process goes to step S1100 to repeat processing from step S1100 through step S1600. Herein, Trb[class] and Tta[class] are values of T_{rb} and Tₜₐ allocated to class, which is an input parameter, respectively. As described above, the number of class is included in the radio resource control plane data from the upper layer, and in addition, the value of T_{rb}, Tₜₐ corresponding to each class is pre-stored in the format of Table 1. Incidentally, upon completion of the processing from step S1100 through step S1600 (S1700: YES), the string of processing is ended.

Upon the completion of the string of processing as the result of the judgment in step S1800 (S1800: YES) or as the result of the judgment in step S1700 (S1700: YES), each value of parameters at the time of the end, Tra_flag, Rxmin, Txmin, and Txmax, is outputted as information.

In short, first, it is checked whether it is possible to use Tᵣₐ as a period accommodating adjacent cell signal level measurement, that is, whether it is possible to use Tᵣₐ and T_{tb} as a combination of intervals. Specifically, if the number of downlink receive slots (Rx) is greater than the number of uplink transmit slots (Tx) (S1200: YES), and if Rx + Tt is equal to or greater than 3 (S1300: NO), Txmin is set to Tr + Rx + Tt (S1500), and otherwise, Txmin is set to Tr + 3 (S1400). Then, Txmax is set to Txmin + Tx (S1600). Then, if Txmax is equal to or less than 8 (S1800: YES), Tᵣₐ is used as a period accommodating adjacent cell signal level measurement, that is, Tᵣₐ and T_{tb} is used as a combination of intervals. Contrarily, if Txmax exceeds 8 (S1800: NO), Tₜₐ is used as a period accommodating adjacent cell signal level measurement, that is, T_{rb} and Tₜₐ is used as a combination of intervals.

It is noted that, though the operation example in Figure 52 assumes the processing in step S1100 through step S1600 to be reexecuted once again after step S1900, the invention is not limited to such a case. If any parameters other than Tra_flag (for example, Rxmin, Txmin, Txmax, etc.) are unnecessary as output, that is, if it is just enough to set Tra_flag only, the processing may be ended immediately without repeating any processing from step S1100 through step S1600 after step S1900.

The timing controller 120 is responsible for determining and controlling the timing of the transmission and reception of signals toward the base station 200, and the reception of measurement data. In accordance with the calculation result of the slot allocation calculator 128, the timing controller 120 controls the precise timing and behaviour of the radio frequency modulator 122, radio frequency demodulator 108, baseband data receiver 106, baseband transmitter 124, and demultiplexer 110. Specifically, it controls each section in such a manner that, if Tra_flag = 1, Tᵣₐ is used as a period accommodating adjacent cell signal level measurement, whereas if Tra_flag = 0, Tₜₐ is used as a period accommodating adjacent cell signal level measurement.

### Uplink

User data transmitted from an external data source and sink 130 is accepted by a terminal interface unit 118, and given to a Layer 3 protocol unit 116. The Layer 3 protocol unit 116 multiplexes the data with any protocol control data, and transmits it via a Layer 2 protocol unit 114. The Layer 2 protocol unit 114 in turn transmits the multiplexed data to a baseband transmitter 124. Subsequently, the multiplexed data is modulated by a radio frequency modulator 122, and then is transmitted over a transmit antenna 104.

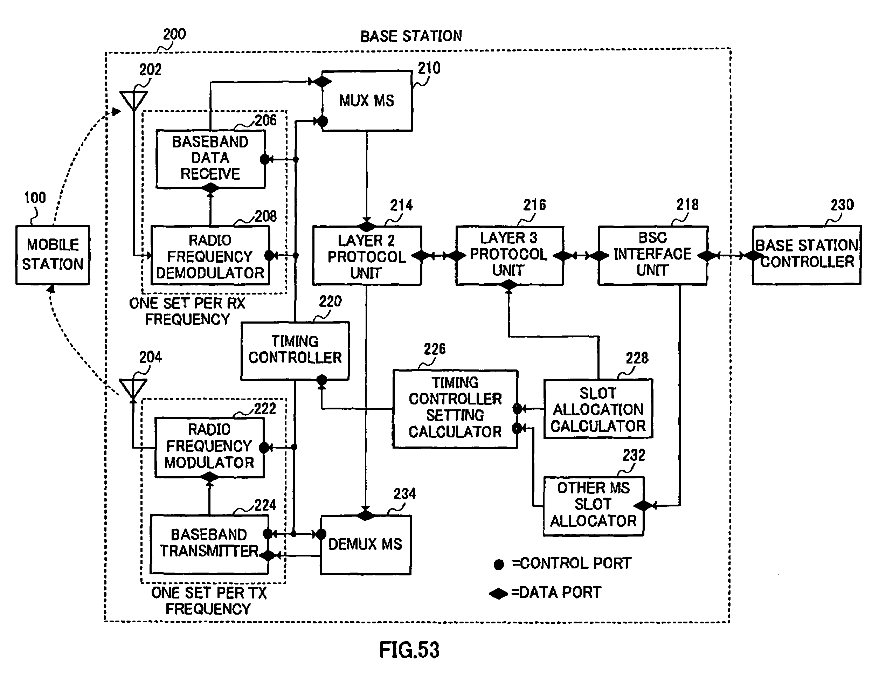

Figure 53 is a block diagram for a base station which is adaptable to the present embodiment.

A wireless base station 200 allows the bi-directional transfer of data between a plurality of mobile stations 100 and an external base station controller (BSC: Base Station Controller) 230.

### Uplink

Each mobile station 100 transmits precisely-timed GPRS signals to the base station 200. The GPRS signals are received on the receive antenna 202, and are demodulated to baseband ones by a radio frequency demodulator 208. The radio frequency demodulator 208 delivers the baseband signals to a baseband data receiver 206. If multiple receive frequencies are used, there is one set of radio frequency demodulator 208 and baseband data receiver 206 per frequency. The baseband data receiver 206 delivers the received baseband data to a multiplexer MS 210. The multiplexer MS 210 marks which MS the data has arrived from depending on its control input from a timing controller 220, and forwards all data to a Layer 2 protocol unit 214. The Layer 2 protocol unit 214 maintains a separate context for each mobile station 100.

Downlink baseband data to be used for NCELL measurement is routed to a Layer 3 protocol unit 216. The Layer 3 protocol unit 216 maintains a separate context for each mobile station 100. The Layer 3 protocol unit 216 separates user plane data and radio resource control plane data. User data and radio resource control plane data is sent to a BSC interface unit 218. The BSC interface unit 218 sends the data to an external base station controller 230.

### Control

Radio resource control plane data is used to perform internal control functions. In particular, a slot allocation calculator 228 calculates, typically according to the data rate required, which GPRS slots are allocated for each mobile station 100. This information is sent to the Layer 3 protocol unit 216. The Layer 3 protocol unit 216 sends allocation information to the mobile station 100. This information is also sent to a timing controller setting calculator 226. In addition, other MS slot allocator 232 receives necessary data from the external Base station controller 230 via the BSC interface unit 218, and calculates allocation information for other mobile stations. This information is also sent to the timing controller setting calculator 226. The timing controller setting calculator 226 in turn reconfigures a timing controller 220 so as to perform each of receive and transmit actions towards each mobile station 100 at the correct time.

The timing controller 220 is responsible for determining and controlling the timing of the transmission and reception of signals toward the mobile station 100. In accordance with the calculation result of the slot allocation calculator 228, the timing controller 220 controls the precise timing and behaviour of the radio frequency modulator 222, radio frequency demodulator 208, baseband data receiver 206, baseband transmitter 224, multiplexer MS 210, and demultiplexer MS 234.

### Downlink

User data and control data transmitted from a base station controller 230 is accepted by a BSC interface unit 218, and given to a Layer 3 protocol unit 216. The Layer 3 protocol unit 216 multiplexes the data with any radio resource control data, and transmits it via a Layer 2 protocol unit 214. The Layer 2 protocol unit 214 in turn transmits the multiplexed data to a demultiplexer MS 234. The demultiplexer MS 234 provides the data for each mobile station 100 on the correct TDMA slot to the correct baseband transmitter 224. Subsequently, the data is modulated by a radio frequency modulator 222, and then is transmitted over a transmit antenna 204. If multiple transmit frequencies are used, there is one set of radio frequency modulator 222 and baseband data transmitter 224 per frequency.

## Claims

1. A method for controlling packet data transmissions in a mobile communications system wherein transmitters and receivers share channel resources dynamically for uplink and downlink operating periods and where allocations of measurement periods between uplink and downlink periods and between downlink and uplink periods are prescribed, **characterised by** re-allocation of measurement periods to increase the availability of uplink resources when uplink resources are otherwise constrained by prescribed allocations of measurement periods.
